# EUROPÄISCHE PATENTSCHRIFT

(11) **EP 3 311 551 B1**
(45) Veröffentlichungstag und Bekanntmachung des Hinweises auf die Patenterteilung: **24.04.2019**
(21) Anmeldenummer: 16731532.4
(22) Anmeldetag: 08.06.2016
(51) Int. Cl.: H04L 29/08, G06F 8/61, G06F 8/65

(54) **VERFAHREN, HAUPTEINHEIT, UND FAHRZEUG ZUM EINBRINGEN VON ANWENDUNGEN IN DIE HAUPTEINHEIT EINES FAHRZEUGS**
METHOD, MAIN UNIT, AND VEHICLE FOR INTRODUCING APPLICATIONS INTO THE MAIN UNIT OF A VEHICLE
PROCÉDÉ, UNITÉ PRINCIPALE ET VÉHICULE POUR CHARGER DES APPLICATIONS DANS L'UNITÉ PRINCIPALE D'UN VÉHICULE

(30) Priorität: 17.06.2015 DE 102015211146
(43) Veröffentlichungstag der Anmeldung: 25.04.2018
(73) Patentinhaber: Bayerische Motoren Werke Aktiengesellschaft, 80809 München (DE)
(72) Erfinder: MICHEL, Maximilian, 81241 München (DE); SCHMIDT, Andre, 04179 Leipzig (DE)
(86) Internationale Anmeldenummer: PCT/EP2016/063005
(87) Internationale Veröffentlichungsnummer: WO 2016/202660

(56) Entgegenhaltungen:
- DE-A1-102008 008 228
- DE-A1-102012 220 132
- US-A1- 2012 030 512

## Beschreibung

Die Erfindung betrifft ein Verfahren, eine Haupteinheit, und/oder ein Fahrzeug umfassend die Haupteinheit zum Einbringen von Anwendungen in die Haupteinheit des Fahrzeugs. Insbesondere betrifft die Erfindung das flexible und/oder sichere Einbringen von Anwendungen in die Haupteinheit eines Fahrzeugs.

Aktuell werden in Fahrzeugen, insbesondere in Kraftfahrzeugen, Haupteinheiten, engl. Head Unit bzw. Head Units, verwendet, die integrierte Webbrowser nutzen, um Webseiten in einer Haupteinheit anzuzeigen, die über bekannte Web-Technologien von einem Server auf die Haupteinheit über ein Kommunikationsmodul des Fahrzeugs geladen werden. Die Inhalte der geladenen Webseiten entsprechen im Allgemeinen den Inhalten, die der Nutzer über die Haupteinheit zur Verfügung gestellt bekommt. Die Übertragung der Webseiten erfolgt auf Nutzerwunsch, so dass die Inhalte der Webseiten erst nach dem Ladevorgang von dem Server zur Verfügung stehen.

Die Patentanmeldung US 2012/0030512 A1 offenbart ein Softwarebereitstellungssystem für einen Infotainment-Computer eines Fahrzeugs. Eine Softwarebereitstellungsanfrage zum benutzerspezifischen Installieren einer Software auf dem Infotainment-Computer kann empfangen werden. In Antwort auf die Anfrage kann die Software auf einem Bereitstellungsserver geortet werden. Die Software kann auf einen Speicher des Infotainment-Computers des Fahrzeugs übertragen werden und auf dem Infotainment-Computer benutzerspezifisch installiert werden.

Die Patentanmeldung DE 10 2012 220 132 A1 beschreibt eine Vorrichtung mit einem durch eine Software betreibbaren, elektronischen Steuergerät und einer Kommunikationseinheit, die für eine Datenübertragung mit dem Steuergerät in Verbindung steht. Dabei ist das Steuergerät unmittelbar mit einem ersten Datenkanal zum Zuführen einer Aktualisierungssoftware verbindbar. Ferner ist die Kommunikationseinheit für einen über einen zweiten Datenkanal geführten Datenaustausch mit einem Server eingerichtet. Der über den zweiten Datenkanal geführte Datenaustausch mit dem Server dient dem Autorisieren des Steuergeräts für das Zuführen der Aktualisierungssoftware über den ersten Datenkanal.

Die Patentanmeldung DE 10 2008 008228 A1 beschreibt ein Verfahren zum verschlüsselten Übertragen von Software in einem Kraftfahrzeug.

Es ist daher eine Aufgabe der Erfindung, ein verbessertes Einbringen von Anwendungen in eine Haupteinheit eines Fahrzeugs bereitzustellen. Insbesondere ist es eine Aufgabe der Erfindung ein effizientes Einbringen von dynamischen Inhalten in eine Haupteinheit bzw. Head Unit eines Fahrzeugs zu ermöglichen.

Gelöst wird die Aufgabe durch die Merkmale der unabhängigen Ansprüche. Vorteilhafte Ausgestaltungen sind in den Unteransprüchen gekennzeichnet.

Die Erfindung zeichnet sich durch ein Verfahren nach Anspruch 1 zum Einbringen von Anwendungen in eine Haupteinheit eines Fahrzeugs aus. Das Verfahren umfasst das Übertragen eines ersten Bezeichners durch eine Softwarekomponente der Haupteinheit über einen ersten Kommunikationskanal an einen Server. Der erste Bezeichner kann beispielsweise ein Uniform Resource Locator, kurz URL, sein. Die URL kann beispielsweise in einer http-Anfrage an den Server übertragen werden. Das Verfahren umfasst ferner das Empfangen einer Hauptanwendung in Antwort auf das Übertragen des ersten Bezeichners von dem Server, das Übertragen einer Fahrgestellnummer des Fahrzeugs durch die Hauptanwendung über einen zweiten Kommunikationskanal an den Server, und das Empfangen von Metadaten zugehörig zu der Fahrgestellnummer des Fahrzeugs, wobei die Metadaten einen oder mehrere Bezeichner umfassen. Vorzugsweise kann die Fahrgestellnummer bei jeder Übertragung von Daten, z.B. bei jeder Anfrage an den Server, zwischen der Haupteinheit und dem Server übertragen werden. Ferner umfasst das Verfahren das Übergeben wenigstens eines Bezeichners der empfangenen Metadaten von der Hauptanwendung an die Softwarekomponente, das Übermitteln des wenigstens einen Bezeichners der empfangenen Metadaten durch die unveränderliche Softwarekomponente über den ersten Kommunikationskanal an den Server, das Empfangen wenigstens einer Anwendung zugehörig zu dem wenigstens einen Bezeichner durch die Softwarekomponente, Speichern der wenigstens einen Anwendung durch die Softwarekomponente, und Weitergabe eines Speicherorts der wenigstens einen Anwendung von der Softwarekomponente an die Hauptanwendung. Hiermit können Anwendungen einfach und/oder flexibel in die Haupteinheit eines Fahrzeugs eingebracht werden. Ferner können Anwendungen dynamisch an die jeweilige Fahrzeugkonfiguration angepasst werden. Änderungen sind auch nach der Produktion des Fahrzeugs jederzeit möglich, so dass der Nutzer dynamisch die Anwendungen für die Haupteinheit seines Fahrzeugs zur Verfügung gestellt bekommt. Das Verfahren kann dabei schon vorab Anwendungen, z.B. alle verfügbaren Anwendungen, auf die Haupteinheit laden, damit diese dem Nutzer schnell und/oder bei Ausfall bzw. Nichtverfügbarkeit eines Kommunikationskanals zu dem Server zur Verfügung gestellt werden können. Der Begriff Haupteinheit und der Begriff Head Unit sind im Rahmen dieser Anmeldung äquivalent und werden austauschbar verwendet.

Gemäß einer vorteilhaften Ausgestaltung kann der erste Bezeichner einen Speicherort der Hauptanwendung auf dem Server bezeichnen, und/oder die Softwarekomponente eine unveränderliche Softwarekomponente sein, und/oder die Softwarekomponente eine native Softwareanwendung der Haupteinheit sein. Durch die Verwendung eines Bezeichners, der den Speicherort der Hauptanwendung bezeichnet, kann effizient die Konfiguration des Einbringens der Anwendungen vereinfacht werden. Vorzugsweise kann die Konfiguration der Haupteinheit während der Produktion des Fahrzeugs vereinfacht werden. Durch die Verwendung einer unveränderlichen Softwarekomponente kann die Sicherheit der Haupteinheit erhöht werden. Ferner kann durch die Verwendung einer nativen Softwarekomponente die Übertragung und Verarbeitung der Daten durch die Softwarekomponente effizienter erfolgen. Vor allem bei einer Haupteinheit mit geringer Rechenleistung kann ein Effizienzgewinn erfolgen.

Gemäß einer weiteren vorteilhaften Ausgestaltung können der erste Kommunikationskanal und der zweite Kommunikationskanal verschlüsselte Kommunikationskanäle sein. Durch die Verwendung von verschlüsselten Kommunikationskanäle kann die Sicherheit bei der Übertragung der Metadaten und/oder Archivdateien und/oder Anwendungen effizient erhöht werden. Ferner kann durch die Verwendung von zwei verschiedenen verschlüsselten Kommunikationskanälen die Sicherheit weiter erhöht werden.

Gemäß einer weiteren vorteilhaften Ausgestaltung kann die Übertragung des ersten Bezeichners nach Start der unveränderlichen Softwarekomponente, nach Start einer Kommunikationseinheit der Haupteinheit, in Abhängigkeit eines zeit-basierten Parameters und/oder durch eine Interaktion des Benutzers mit der Haupteinheit erfolgen. Hiermit kann die Übertragung und Konfiguration der Hauptanwendung der Haupteinheit flexibel gesteuert werden.

Gemäß einer weiteren vorteilhaften Ausgestaltung können die Metadaten eine URL zu einer Anwendung, einen Hashwert der Anwendung, und/oder eine Versionsnummer der Anwendung umfassen. Durch die Verwendung einer URL kann eine einfache Identifikation der Anwendung erfolgen. Ferner kann der Hashwert für die Validierung der Anwendung hinsichtlich möglicher Manipulationen der Anwendung durch Dritte verwendet werden und damit die Sicherheit des Einbringens der Anwendungen in die Haupteinheit weiter erhöhen.

Gemäß einer weiteren vorteilhaften Ausgestaltung kann der Bezeichner der Metadaten eine URL zu einer Archivdatei der Anwendung und den Hashwert der Archivdatei der Anwendung umfasst. Durch die Verwendung einer URL kann eine einfache Identifikation der Anwendung erfolgen. Ferner kann der Hashwert für die Validierung der Anwendung hinsichtlich möglicher Manipulationen der Anwendung durch Dritte verwendet werden und damit die Sicherheit des Einbringens der Anwendungen in die Haupteinheit weiter erhöhen.

Gemäß einer weiteren vorteilhaften Ausgestaltung kann das Empfangen der Anwendung durch die Softwarekomponente ein Validieren einer Archivdatei der Anwendung und ein Entpacken der Archivdatei umfassen, falls das Validieren der Archivdatei erfolgreich ist. Durch das Validieren der Archivdatei kann die Sicherheit des Einbringens der Anwendung in die Haupteinheit erhöht werden.

Gemäß einer weiteren vorteilhaften Ausgestaltung kann das Verfahren weiterhin das Aktualisieren der wenigstens einen Anwendung durch die Hauptanwendung umfassen. Durch die Möglichkeit des Aktualisierens der Anwendungen der Haupteinheit kann die Haupteinheit stets mit einer aktuellen Version der Anwendung versorgt werden. Der Nutzer kann somit unmittelbar und/oder automatisch mit Weiterentwicklungen der Anwendungen versorgt werden.

Gemäß einer weiteren vorteilhaften Ausgestaltung kann das Aktualisieren der wenigstens einen Anwendung das Übertragen der Fahrgestellnummer des Fahrzeugs durch die Hauptanwendung über einen zweiten Kommunikationskanal an den Server, das Empfangen von aktualisierten Metadaten zugehörig zu der Fahrgestellnummer des Fahrzeugs, wobei die Metadaten einen oder mehrere Bezeichner umfassen, und das Vergleichen der aktualisierten Metadaten mit den Metadaten umfassen. Falls die aktualisierten Metadaten von den Metadaten abweichen, kann das Verfahren das Übergeben wenigstens eines Bezeichners der aktualisierten Metadaten von der Hauptanwendung an die Softwarekomponente, das Übermitteln des wenigstens einen Bezeichners der aktualisierten Metadaten durch die unveränderliche Softwarekomponente über den ersten Kommunikationskanal an den Server, das Empfangen wenigstens einer aktualisierten Anwendung zugehörig zu dem wenigstens einen Bezeichner durch die Softwarekomponente, und die Weitergabe der wenigstens einen aktualisierten Anwendung von der Softwarekomponente an die Hauptanwendung zum Ersetzen der wenigstens einen Anwendung durch die wenigstens eine aktualisierte Anwendung umfassen. Hiermit kann eine einfache, flexible und/oder effiziente Aktualisierung der Anwendungen durch die Hauptanwendung erfolgen. Die Aktualisierung kann beispielsweise zeitbasiert und/oder ereignisbasiert erfolgen und damit flexibel gesteuert werden.

Die Erfindung zeichnet sich ferner aus durch eine Haupteinheit eines Fahrzeugs nach Anspruch 8, wobei die Haupteinheit Instruktionen umfasst, die dazu ausgebildet sind, das oben beschriebene Verfahren auszuführen.

Die Erfindung zeichnet sich ferner aus durch ein Fahrzeug nach Anspruch 9 umfassend eine Haupteinheit, wobei die Haupteinheit Instruktionen umfasst, die dazu ausgebildet sind, das oben beschriebene Verfahren auszuführen.

Alle vorstehend genannten Merkmale und Merkmalskombinationen sowie die nachfolgend beschriebenen Merkmale und Merkmalskombinationen sind nicht nur in der jeweils angegebenen Kombination, sondern auch in anderen Kombinationen oder aber in Alleinstellung verwendbar.

Wie bereits eingangs erwähnt, befasst sich das vorliegende Dokument mit einem Verfahren zum sicheren Einbringen von Anwendungen in Kommunikationssysteme von Fahrzeugen und insbesondere in eine Haupteinheit eines Fahrzeugs. Eine oder mehrere Anwendungen können zunächst auf einem Server gespeichert und/oder abgelegt sein. Die Ablage der Anwendungen kann als Archivdateien erfolgen. Die Archivdateien können komprimierte Dateien sein, die mit gängigen Werkzeugen erzeugen werden können. Vorzugsweise sind die Archivdateien mittels einer kryptographischen Hashfunktion signiert. Beispielsweise können die Archivdateien mit einem SHA Algorithmus, einem MD5 Algorithmus, und/oder einem anderer kryptographischen Hashfunktion signiert werden. Der Server kann die Archivdateien und/oder die dazugehörigen Signaturen speichern. Vorteilhafterweise kann ein Signieren der Archivdateien verhindern, dass die Archivdateien verändert werden, um beispielsweise Schadcode einzufügen, der von dem Server in ein Fahrzeug übertragen wird, wenn eine Archivdatei von dem Server auf das Fahrzeug übertragen wird, und/oder unsignierte, und damit potentiell unsichere Anwendungen von dem Server in ein Fahrzeug geladen werden.

Vorzugsweise kann das Signieren der Anwendungen durch einen Rechner vorgenommen werden, der keinen Zugriff auf öffentliche Netzwerke hat und nur bestimmte, vertrauenswürde Personen erlaubt, das Signieren der Anwendungen durchzuführen. Die signierten Archivdateien und/oder die dazugehörigen Signaturen können vom dem Rechner, der die Anwendungen signiert, in den Server geladen werden. Durch Zugriffsberechtigungen auf dem Server kann sichergestellt werden, dass nur der Rechner, der die Anwendungen signiert, die signierten Archivdateien und/oder die dazugehörigen Signaturen auf den Server übertragen kann. Nach dem Übertragen der signierten Archivdateien und/oder der dazugehörigen Signaturen, stehen diese auf dem Server zur Verfügung und können auf eines oder mehrere Fahrzeuge übertragen werden. Die Anwendungen, die in den Archivdateien gespeichert sind, können beispielsweise Hauptanwendungen für unterschiedliche Fahrzeuge und/oder Apps umfassen.

Eine oder mehrere Archivdateien und damit eine oder mehrere Anwendungen des Servers können von einem Fahrzeug angefordert werden. Im Detail kann eine unveränderliche Softwarekomponente eines Kommunikationssystems des Fahrzeugs eine Hauptanwendung von dem Server laden. Unveränderlich kann im Zusammenhang mit der Softwarekomponente bedeuten, dass die Softwarekomponente in einer Haupteinheit während der Produktion der Haupteinheit einmalig geschrieben wird und/oder die Rechte im Anschluss daran so verändert werden, dass die Softwarekomponente nur gelesen und/oder ausgeführt werden kann. Eine Aktualisierung der unveränderlichen Softwarekomponente kann beispielsweise nur durch Werkstätten mit speziellen Rechten erfolgen. Eine Aktualisierung der unveränderlichen Softwarekomponente kann durch einen Nutzer, z.B. einen Fahrzeugeigentümer, nicht durchgeführt werden. Die unveränderliche Softwarekomponente kann eine native Anwendung des Kommunikationssystems sein. Die Hauptanwendung kann eine nicht-native Anwendung des Kommunikationssystems sein. Das Kommunikationssystem kann eine Haupteinheit und/oder eine Kommunikationseinheit des Fahrzeugs umfassen. Vorzugsweise ist die Haupteinheit des Fahrzeugs mit der Kommunikationseinheit des Fahrzeugs gekoppelt. Beispielsweise kann die Kommunikationseinheit in der Haupteinheit integriert sein. Die Kommunikationseinheit kann einen Kommunikationskanal über eine Drahtlosschnittstelle bereitstellen, mit der die Haupteinheit mit dem Server kommunizieren kann. Der Kommunikationskanal zwischen der Kommunikationseinheit bzw. der Haupteinheit und dem Server kann verschlüsselt sein.

Die Hauptanwendung kann eine Management-App sein. Die Hautpanwendung kann fahrzeugspezifisch und/oder an die Haupteinheit angepasst sein. Vorzugsweise ist die Hauptanwendung eine Java-Skript Anwendung. Die Hauptanwendung kann nach einer vordefinierten Logik von dem Server auf die Haupteinheit heruntergeladen werden. Beispielsweise kann die Hauptanwendung nach einem Starten der Kommunikationseinheit und/oder einem Starten der Haupteinheit von dem Server auf die Haupteinheit heruntergeladen werden. Beispielsweise kann die Hauptanwendung nach vordefinierten Zeitkriterien und/oder vorgegebenen Nutzerinterkationen heruntergeladen werden. Ein Ablageort der Hauptanwendung auf dem Server kann durch ein Konfigurationssystem definiert sein. Der Ablageort kann beispielsweise während der Produktion und während des gesamten Lebenszyklus des Fahrzeugs und/oder der Haupteinheit und/oder der Kommunikationseinheit festgelegt werden. Ferner kann der Ablageort der Hauptanwendung während der Produktion und während des gesamten Lebenszyklus des Fahrzeugs von dem Konfigurationssystem über einen verschlüsselten Kommunikationskanal in das Fahrzeug, vorzugsweise in die Kommunikationseinheit und/oder die Haupteinheit des Fahrzeugs, übertragen werden. Der Ablageort der Hauptanwendung kann ein Bezeichner sein. Vorzugsweise kann der Ablageort der Hauptanwendung ein eindeutiger Bezeichner sein. Beispielsweise kann als Bezeichner einen Uniform Resource Identifier, kurz URI, verwendet werden.

Zum Laden bzw. Übertragen der Hauptanwendung von dem Server auf die Haupteinheit, kann die unveränderliche Softwarekomponente der Haupteinheit einen Kommunikationskanal über die Kommunikationseinheit mit dem Server aufbauen. Nach Aufbau des Kommunikationskanals kann die unveränderliche Softwarekomponente den Ablage bzw. Speicherort der Hauptanwendung über den Kommunikationskanal an den Server übertragen. Der Server kann den Ablageort der Hauptanwendung verarbeiten und als Antwort die dazugehörige Hauptanwendung übertragen. Beispielsweise kann der Server die signierte Archivdatei der Hauptanwendung und/oder die dazugehörige Signatur der Hauptanwendung an die Haupteinheit übertragen. Die Haupteinheit kann die signierte Archivdatei der Hauptanwendung und/oder die dazugehörige Signatur empfangen, und die Signatur überprüfen. Falls die Signaturüberprüfung erfolgreich ist, kann die Haupteinheit bzw. die unveränderliche Softwarekomponente der Haupteinheit die empfangene Archivdatei entpacken und ausführen. Die Hauptanwendung kann somit in der Haupteinheit installiert und/oder ausgeführt werden.

Nach der Installation bzw. dem Ausführen der Hauptanwendung kann die Hauptanwendung einen weiteren Kommunikationskanal mit dem Server aufbauen. Dazu kann sich die Hauptanwendung über einen sicheren Kommunikationskanal, z.B. HTTPS, mit dem Server verbinden. Die Hauptanwendung kann von dem Server eine Liste von Metadaten von Anwendungen abrufen. Um die korrekte Liste von Metadaten für ein bestimmtes Fahrzeug zu erhalten, kann die Hauptanwendung die Fahrgestellnummer des Fahrzeugs an den Server übermitteln. Mithilfe der Fahrgestellnummer und/oder eines registrierten und/oder authentisierten Benutzers kann der Server das Fahrzeug und/oder eine Ausstattung bzw. Konfiguration des Fahrzeugs eindeutig identifizieren. In anderen Worten: Die Zuordnung der Anwendungen zu einem spezifischen Fahrzeug kann über die Fahrgestellnummer erfolgen. Die Liste von Metadaten kann beispielsweise einen oder mehrere Bezeichner zur Bezeichnung von Anwendungen und/oder Archivdateien der Anwendungen des Servers umfassen. Im Detail können die Metadaten einen Uniform Resource Locator, kurz URL, zum Ort der signierten Archivdatei der Anwendung, eine dazugehörigen Signatur, z.B. einen Hashwert, eine Versionsbezeichnung der Anwendung, und/oder weitere Konfigurationsparameter umfassen.

Die Hauptanwendung der Haupteinheit kann die Metadaten umfassend einen oder mehrere Bezeichner über den weiteren Kommunikationskanal empfangen. Die Haupteinheit kann anschließend der unveränderlichen Softwarekomponente einen oder mehrere Bezeichner der empfangenen Metadaten übergeben. Vorzugsweise kann die Hauptanwendung der unveränderlichen Softwarekomponente die URL und den Hashwert der Archivdatei einer Anwendung übergeben. Die unveränderliche Softwarekomponente kann nach Empfang der Bezeichner von der Hautpanwendung über den Kommunikationskanal der unveränderlichen Komponente die Archivdatei von dem Server auf die Haupteinheit herunterladen. Dazu kann beispielsweise die unveränderliche Softwarekomponente die URL der zu übertragenen Archivdatei an den Server übermitteln. In Antwort auf die übertragene URL kann der Server die Archivdaten der durch die URL spezifizierten Anwendung an die unveränderliche Softwarekomponente übertragen. Die unveränderliche Softwarekomponente kann die empfangene Archivdatei der Anwendung extrahieren, sofern die Signatur der Archivdatei mit der von der Hauptanwendung übergebenen Signatur übereinstimmt. Handelt es sich bei der Signatur beispielsweise um einen Hashwert, so berechnet die unveränderliche Softwarekomponente den Hashwert für die empfangene Archivdatei der Anwendung und vergleicht den Hashwert der empfangenen Archivdatei mit dem von der Hauptanwendung übergebenen Hashwert der Archivdatei der Anwendung.

Nach dem Entpacken der Archivdatei der Anwendung kann die unveränderliche Softwarekomponente die Anwendung bzw. einen Speicherort der Anwendung an die Hauptanwendung weiterleiten. Die Hauptanwendung wiederum kann den Speicherort der Anwendung empfangen und speichern. Ferner kann die Hauptanwendung eine grafische Oberfläche der Haupteinheit so verändern, dass die Anwendung dem Nutzer der Haupteinheit angezeigt wird. Der Nutzer kann beispielsweise durch eine Benutzerinteraktion die Anwendung ausführen. Hierfür kann die Hauptanwendung die Anwendung von den Speicherort laden und ausführen. Für das Ausführen der Anwendung kann die Anwendung wiederum ein Zertifikat besitzen, mit dem sich die Anwendung vor dem Ausführen gegenüber der Haupteinheit ausweisen muss.

Zusätzlich oder alternativ kann das Laden der Anwendungen in die Haupteinheit nach dem oben beschriebenen Verfahren kontinuierlich in bestimmten Zeitperioden und/oder abhängig von bestimmten Ereignissen erfolgen, ohne explizit von einem Nutzer der Haupteinheit angestoßen zu werden. Dadurch kann die Haupteinheit Anwendungen vor einer expliziten Anforderung durch den Nutzer bereits an die Haupteinhalt übermitteln. Der Nutzer kann somit schneller bei Bedarf die Anwendungen auf der Haupteinheit ausführen, da die Anwendungen bereits auf der Haupteinheit hinterlegt bzw. gespeichert sind.

Ferner ermöglicht das oben beschriebene Verfahren eine sichere Übertragung der Anwendungen auf die Haupteinheit. Durch die Verwendung von zwei vorzugsweise verschlüsselten Kommunikationskanälen unterschiedlicher Komponenten der Haupteinheit kann eine Verbesserung der Sicherheit bei der Übertragung der Anwendungen erreicht werden. Die Verwendung von Archivdateien und die Sicherung der Archivdateien mit Signaturen verhindert eine Manipulation der Archivdateien bei der Übertragung. Zusätzlich wird durch die unveränderliche Softwarekomponente verhindert, dass die Überprüfung der Signaturen manipuliert werden kann.

Ferner kann das Verfahren effizient an unterschiedliche Fahrzeuge und/oder Fahrzeugkonfigurationen angepasst werden. Sowohl die Hauptanwendung als auch die Anwendungen bzw. Apps können effizient und automatisiert an neue Fahrzeuge und Fahrzeugkonfigurationen angepasst werden. Eine Installation der Hauptanwendung und eine Installation der verfügbaren Anwendungen können somit automatisiert erfolgen, bevor der Nutzer des Fahrzeugs dieses erstmalig nutzt.

Weiterhin kann die Hauptanwendung eine Aktualisierung der Anwendungen durchführen. Eine Aktualisierung der Anwendungen kann auf folgenden Kriterien basieren: Zeit, Nutzerinteraktion, Aufforderung durch einen Server über eine web-basierte Nachricht, und/oder eine SMS. Tritt eines oder mehrere Kriterien ein, so kann die Hauptanwendung die Liste der Metadaten von dem Server erneut herunterladen. Die neue Liste der Metadaten kann die Hauptanwendung mit der aktuellen Liste der Metadaten vergleichen. Bei Abweichungen der Listen von Metadaten kann die Hauptanwendung die entsprechenden Bezeichner an die unveränderliche Softwarekomponente übergeben, die nach oben beschriebenen Verfahren die Anwendungen von dem Server herunterlädt und an die Hauptanwendung weiterleitet. Dabei kann die bestehende Anwendung durch eine neue Anwendung ersetzt werden. In anderen Worten: Die bestehende Anwendung kann aktualisiert werden.

Durch die Möglichkeit einer dynamischen Aktualisierung der Anwendungen kann der Nutzer neue Anwendungen einfacher nutzen. Der Nutzer hat somit die Möglichkeit, bestimmte Fahrzeugkonfigurationen durch die Freischaltung zusätzlicher Anwendungen oder Aktualisierung bestehender Anwendungen auch nach Fahrzeugauslieferung durchzuführen.

## Patentansprüche

1. Verfahren zum Einbringen von Anwendungen in eine Haupteinheit eines Fahrzeugs:
Übertragen eines ersten Bezeichners durch eine unveränderliche Softwarekomponente der Haupteinheit über einen ersten Kommunikationskanal an einen Server;
Empfangen einer Hauptanwendung in Antwort auf das Übertragen des ersten Bezeichners von dem Server durch die Haupteinheit;
Installieren der Hauptanwendung in der Haupteinheit;
Übertragen einer Fahrgestellnummer des Fahrzeugs durch die Hauptanwendung über einen zweiten Kommunikationskanal an den Server;
Empfangen von Metadaten zugehörig zu der Fahrgestellnummer des Fahrzeugs von dem Server durch die Hauptanwendung, wobei die Metadaten einen oder mehrere Bezeichner umfassen;
Übergeben wenigstens eines Bezeichners der empfangenen Metadaten von der Hauptanwendung an die unveränderliche Softwarekomponente;
Übermitteln des wenigstens einen Bezeichners der empfangenen Metadaten durch die unveränderliche Softwarekomponente über den ersten Kommunikationskanal an den Server;
Empfangen wenigstens einer Anwendung zugehörig zu dem wenigstens einen Bezeichner durch die unveränderliche Softwarekomponente;
Speichern der wenigstens einen Anwendung durch die unveränderliche Softwarekomponente; und
Weitergabe eines Speicherorts der wenigstens einen Anwendung von der unveränderlichen Softwarekomponente an die Hauptanwendung.

2. Verfahren nach Anspruch 1, wobei der erste Bezeichner einen Speicherort der Hauptanwendung auf dem Server bezeichnet; und/oder
wobei die Softwarekomponente eine native Softwareanwendung der Haupteinheit ist.

3. Verfahren nach einem der vorhergehenden Ansprüche, wobei der erste Kommunikationskanal und der zweite Kommunikationskanal verschlüsselte Kommunikationskanäle sind.

4. Verfahren nach einem der vorhergehenden Ansprüche, wobei die Übertragung des ersten Bezeichners nach Start der unveränderlichen Softwarekomponente, nach Start einer Kommunikationseinheit der Haupteinheit, in Abhängigkeit eines zeit-basierten Parameters und/oder durch eine Interaktion des Benutzers mit der Haupteinheit erfolgt.

5. Verfahren nach einem der vorgehenden Ansprüche, wobei die Metadaten eine URL zu einer Anwendung, einen Hashwert der Anwendung, und/oder eine Versionsnummer der Anwendung umfassen.

6. Verfahren nach einem der vorgehenden Ansprüche, wobei das Empfangen der Anwendung durch die Softwarekomponente umfasst:
Validieren einer Archivdatei der Anwendung; und
Entpacken der Archivdatei, falls das Validieren der Archivdatei erfolgreich ist.

7. Verfahren nach einem der vorhergehenden Ansprüche, wobei das Verfahren weiterhin umfasst:
Aktualisieren der wenigstens einen Anwendung durch die Hauptanwendung, wobei das Aktualisieren der wenigstens einen Anwendung umfasst:
Übertragen der Fahrgestellnummer des Fahrzeugs durch die Hauptanwendung über einen zweiten Kommunikationskanal an den Server;
Empfangen von aktualisierten Metadaten zugehörig zu der Fahrgestellnummer des Fahrzeugs von dem Server durch die Hauptanwendung, wobei die Metadaten einen oder mehrere Bezeichner umfassen;
Vergleichen der aktualisierten Metadaten mit den Metadaten durch die Hauptanwendung;
Falls die aktualisierten Metadaten von den Metadaten abweichen, Übergeben wenigstens eines Bezeichners der aktualisierten Metadaten von der Hauptanwendung an die unveränderliche Softwarekomponente;
Übermitteln des wenigstens einen Bezeichners der aktualisierten Metadaten durch die unveränderliche Softwarekomponente über den ersten Kommunikationskanal an den Server;
Empfangen wenigstens einer aktualisierten Anwendung zugehörig zu dem wenigstens einen Bezeichner durch die unveränderliche Softwarekomponente; und
Weitergabe der wenigstens einen aktualisierten Anwendung von der unveränderlichen Softwarekomponente an die Hauptanwendung zum Ersetzen der wenigstens einen Anwendung durch die wenigstens eine aktualisierte Anwendung.

8. Haupteinheit eines Fahrzeugs, wobei die Haupteinheit Instruktionen umfasst, die dazu ausgebildet sind, das Verfahren nach einem der Ansprüche 1 bis 7 auszuführen.

9. Fahrzeug umfassend eine Haupteinheit, wobei die Haupteinheit Instruktionen umfasst, die dazu ausgebildet sind, das Verfahren nach einem der Ansprüche 1 bis 7 auszuführen.

## Claims

1. A method for introducing applications into a main unit of a vehicle, comprising the following steps:
transmitting a first identifier by an invariable software component of the main unitvia a first communication channel to a server;
receiving, from the server by the main unit, a main application in response to the transmission of the first identifier;
installing the main application in the main unit;
transmitting a vehicle identification number of the vehicle by the main application via a second communication channel to the server;
receiving, from the server by the main application, metadata associated with the vehicle identification number of the vehicle, wherein the metadata comprise one or more identifiers;
transferring at least one identifier of the received metadata from the main application to the invariable software component;
transmitting the at least one identifier of the received metadata by the invariable software component via the first communication channel to the server;
receiving at least one application associated with the at least one identifier by the invariable software component;
storing the at least one application by the invariable software component; and
forwarding a storage location of the at least one application from the invariable software component to the main application.

2. A method according to claim 1, wherein the first identifier identifies a storage location of the main application on the server; and/or wherein the software component is a native software application of the main unit.

3. A method according to either one of the preceding claims, wherein the first communication channel and the second communication channel are encrypted communication channels.

4. A method according to any one of the preceding claims, wherein the first identifier is transmitted once the invariable software component has been started, once a communication unit of the main unit has been started, depending on a time-based parameter and/or by an interaction of the user with the main unit.

5. A method according to any one of the preceding claims, wherein the metadata comprise a URL to an application, a hash value of the application, and/or a version number of the application.

6. A method according to any one of the preceding claims, wherein the receipt of the application by the software component comprises the following steps:
validating an archive file of the application; and
unpacking the archive file if the validation of the archive file is successful.

7. A method according to any one of the preceding claims, wherein the method also comprises the following steps:
updating the at least one application by the main application, wherein the updating of the at least one application comprises the following steps:
transmitting the vehicle identification number of the vehicle by the main application via a second communication channel to the server;
receiving updated metadata associated with the vehicle identification number of the vehicle from the server by the main application, wherein the metadata comprise one or more identifiers;
comparing the updated metadata with the metadata by the main application;
if the updated metadata differ from the metadata, transferring at least one identifier of the updated metadata from the main application to the invariable software component;
transmitting the at least one identifier of the updated metadata by the invariable software component via the first communication channel to the server;
receiving, by the invariable software component, at least one updated application associated with the at least one identifier; and
forwarding the at least one updated application from the invariable software component to the main application in order to replace the at least one application by the at least one updated application.

8. A main unit of a vehicle, wherein the main unit comprises instructions designed to carry out the method according to any one of claims 1 to 7.

9. A vehicle comprising a main unit, wherein the main unit comprises instructions designed to carry out the method according to any one of claims 1 to 7.

## Revendications

1. Procédé permettant de charger des applications dans une unité principale d'un véhicule comprenant des étapes consistant à :
transmettre à un serveur un premier identifiant par un composant logiciel invariable de l'unité principale par l'intermédiaire d'un premier canal de communication,
recevoir une application principale en réponse à la transmission du premier identifiant à partir du serveur par l'unité principale,
installer l'application principale dans l'unité principale,
transmettre au serveur le numéro de châssis du véhicule par l'application principale par l'intermédiaire d'un second canal de communication,
recevoir des métadonnées associées au numéro du châssis du véhicule à partir du serveur par l'application principale, les métadonnées comprenant au moins un identifiant,
remettre au moins un identifiant des métadonnées reçues à partir de l'application principale au composant logiciel invariable,
fournir au serveur l'identifiant des métadonnées reçues par le composant logiciel invariable par l'intermédiaire du premier canal de communication,
recevoir au moins une application associée à l'identifiant par le composant logiciel invariable,
enregistrer l'application par le composant logiciel invariable, et
retransmettre à l'application principale l'emplacement de l'application par le composants logiciel invariable.

2. Procédé conforme à la revendication 1,
selon lequel le premier identifiant identifie l'emplacement de l'application principale sur le serveur, et/ou
le composant logiciel est une application logicielle native de l'unité principale.

3. Procédé conforme à l'une des revendications précédentes,
selon lequel le premier canal de communication et le second canal de communication sont des canaux de communication cryptés.

4. Procédé conforme à l'une des revendications principales,
selon lequel la transmission du premier identifiant est effectuée après le démarrage du composant logiciel invariable, après le démarrage d'une unité de communication de l'unité principale, en fonction d'un paramètre basé sur le temps et/ou par une interaction de l'utilisateur avec l'unité principale.

5. Procédé conforme à l'une des revendications précédentes,
selon lequel les métadonnées comportent un URL vers une application, une valeur de hachage de l'application et/ou le numéro de version de l'application.

6. Procédé conforme à l'une des revendications précédentes,
selon lequel la réception de l'application par le composant logiciel comporte :
une validation d'un fichier d'archivé de l'application, et
une décompression du fichier d'archivé lorsque la validation du fichier d'archivé a réussi.

7. Procédé conforme à l'une des revendications précédentes,
selon lequel le procédé comporte en outre des étapes consistant à : actualiser l'application par l'application principale, l'actualisation de l'application comprenant des étapes consistant à :
transmettre au serveur le numéro de châssis du véhicule par l'application principale par l'intermédiaire d'un second canal de communication,
recevoir des métadonnées actualisées associées au numéro de châssis du véhicule à partie du serveur, par l'application principale, les métadonnées comprenant au moins un identifiant,
comparer les métadonnées actualisées avec les métadonnées par l'application principale,
lorsque les métadonnées actualisées diffèrent des métadonnées, remettre au moins un identifiant des métadonnées actualisées à partir de l'application principale au composant logiciel invariable,
fournir au serveur l'identifiant des métadonnées actualisées par le composant logiciel invariable par l'intermédiaire du premier canal de communication,
recevoir au moins une application actualisée associée à l'identifiant par le composant logiciel invariable, et
retransmettre l'application actualisée à partir du composant logiciel invariable à l'application principale pour remplacer l'application par l'application actualisée.

8. Unité principale d'un véhicule comprenant des instructions réalisées pour permettre la mise en oeuvre du procédé conforme à l'une des revendications 1 à 7.

9. Véhicule comprenant une unité principale comprenant des instructions réalisées pour permettre la mise en oeuvre du procédé conforme à l'une des revendications 1 à 7.
